# EUROPEAN PATENT SPECIFICATION

(11) **EP 2 873 331 B1**
(45) Date of publication and mention of the grant of the patent: **31.01.2018**
(21) Application number: 13193197.4
(22) Date of filing: 15.11.2013
(51) Int. Cl.: A23L 33/17

(54) **Food compositions**
Nahrungsmittelzusammensetzungen
Compositions alimentaires

(43) Date of publication of application: 20.05.2015
(73) Proprietor: Grenade (UK) Ltd, Coventry Warwickshire CV5 6UR (GB)
(72) Inventor: Barratt, Alan Richard, Coventry, Warwickshire CV5 6UR (GB)
(74) Representative: Johnson, Yvonne Catherine

(56) References cited:
- EP-A1- 2 327 315
- US-A1- 2007 280 997
- US-A1- 2010 204 121
- US-A1- 2011 097 442
- Anonymous: "Nutrisport MRP 60 30", Discount Supplements , 2011, pages 7-8, XP002722313, Retrieved from the Internet: URL:http://www.discount-supplements.co.uk/ sports-supplements-meal-replacements-mrp-n utrisport-mrp-60-30-2-5kg#product_details [retrieved on 2014-03-26]

## Description

### Field of the Invention

This invention relates to food compositions, in particular health and/or body building food compositions, methods of making food compositions and their use.

### Background to the Invention

Appropriate nutrient intake is an important aspect of maintaining and improving health and fitness. Body building relies on the nutrient supplements that can help to provide the energy and protein needed to build and maintain muscle mass.

Commonly, a powdered formulation of nutrients, for example comprising whey protein isolate, is mixed with milk to form a protein shake. These protein shakes are consumed regularly by people who are exercising and body building in order to boost the nutrients available to their body in the post work-out recovery phase.

Achieving the correct balance of nutrients is important to ensure that the body has everything it needs to recover and build muscle efficiently. Whey protein, casein, branch-chained amino acids (BCAAs) and glutamine are examples of commonly used health and body building supplements where they are considered important to provide sufficient essential amino acids during muscle growth and maintenance.

However, some supplements can fail to achieve the right balance, resulting in lower nutrient availability and wastage of excess nutrients. Therefore, an aim of the present invention is to provide an improved food composition for maintaining and building muscle mass.

### Summary of the Prior Art

"Nutrisport MRP 60 30" (Discount Supplements, 2011, pages 7-8, Retrieved from the Internet: URL:http://www.discount-supplements.co.uk/sports-supplements-meal-replacements-mrp-nutrisport-mrp-60-30-2-5kg#product_details [retrieved on 2014-03-26]) discloses a meal replacement shake comprising un-denatured cross-flow microfiltered whey protein isolate (35%) and isolated un-denatured casein (33%). The meal replacement shake is prepared by mixing all ingredients.

### Summary of the Invention

According to a first aspect of the invention, there is provided a food composition, which is a protein supplement for adults, consisting of whey protein isolate and non-denatured casein; and one or more further ingredients selected from the group consisting of: flavourings and sweeteners; flavour enhancers, including salt; thickeners, stabilisers and gelling agents; colourings; preservatives; foaming agents; vitamins and minerals; emulsifiers; fibre; oils and non-dairy creamers; and combinations thereof; and optionally aqueous solvent or carrier, wherein the amount of whey protein isolate relative to non-denatured casein is in a weight ratio of from about 1:1.5 to about 1.5:1, and wherein the total amount of protein in the food composition is more than 60% by weight.

Advantageously, the composition of the invention provides an ideal ratio of whey protein to casein, which is superior for nutrient provision when compared to taking either whey protein or casein on its own.

In particular, consumption of the composition of the present invention provides an initial peak of essential amino acids in the blood to trigger the protein synthesis (muscle building) process, by virtue of the amount of whey protein provided in the composition, and then a longer term "drip-feed" of essential amino acids to continue the protein synthesis and prevent the protein catabolism is provided, by virtue of the amount of casein provided in the composition.

Surprisingly, a whey and casein combination provides significant gains in lean muscle relative to whey protein combined with BCAAs and glutamine, despite there being fewer essential amino acids and glutamine.

According to another aspect of the present invention, there is provided the use of the food composition according to the invention as a health supplement and/or body building supplement.

The use of the food composition according to the invention may comprise use to increase the amount of muscle mass in the body or to increase the strength of existing body muscles. It may in particular be that the use is to increase the amount of lean muscle mass in the body.

According to another aspect of the present invention, there is provided a method of manufacturing a food composition, which is a protein supplement for adults, comprising the steps of:
mixing non-denatured casein with whey protein isolate in a ratio of from about 1:1.5 to about 1.5:1,
and mixing one or more further ingredients, selected from the group consisting of flavouring and sweeteners; flavour enhancers, including salt; thickeners, stabilisers and gelling agents; colourings; preservatives; foaming agents; vitamins and minerals; emulsifiers; fibre; oils and non-dairy creamers; and combinations thereof;
wherein the one or more further ingredients and the two proteins may be combined in any order;
so as to obtain a food composition in accordance with the first aspect of the invention.

### Detailed Description of the Invention

A key aspect of the invention is the weight ratio of the two proteins within the composition. In this regard, the weight ratio of whey protein isolate relative to non-denatured casein is from about 1:1.5 to about 1.5:1.

In one embodiment the weight ratio of whey protein isolate relative to non-denatured casein is from about 1:1.5 up to about 1.3:1. In one embodiment it is from about 1:1.3 up to about 1.5:1.

In one embodiment of the invention the weight ratio of whey protein isolate relative to non-denatured casein may be from about 1:1.4 to about 1.4:1, or from about 1:1.3 to about 1.3:1. In one embodiment it is from about 1:1.25 to about 1.25:1. In one embodiment it is from about 1:1.2 to about 1.2:1. It may be from about 1:1.1 to about 1.2:1 or it may be from about 1:1.2 to about 1.1:1.

The weight ratio may, for example, suitably be from about 1:1.1 to about 1.1:1.

The ratio may be about 1:1, e.g. it may be 1:1 within a margin of plus or minus 5%, or within a margin of plus or minus 3%, or within a margin of plus or minus 2%, or within a margin of plus or minus 1%.

In some compositions of the invention the ratio may be exactly 1:1.

It has been found to be particularly beneficial to have this whey and casein combination. The combination in a ratio of 1:1 or close to 1:1 provides significant gains in lean muscle. In particular, the consumption of the composition of the invention may provide much greater gains in lean muscle in the user's body than consumption of whey protein combined with BCAAs and glutamine.

The composition of the invention is a food composition. Thus all components within the composition must be safe for humans to ingest. The composition is intended to be edible by humans.

The composition is specifically intended for human consumption and is particularly intended to be suitable for consumption by adult males and females, most particularly adult males and females who are looking to improve their body muscle mass and/or the strength of their body muscles.

The food composition is a protein supplement. Therefore the composition is, in the majority, formed of protein.

The total protein content of the composition is 60% or more, such as 65% or more or 66% or more; in some embodiments it may even be 70% or more, or 75% or more of the composition.

For example, the total protein content of the composition may be from 60% to 90% of the composition, or from 60% to 85% of the composition, or from 60% to 80% of the composition.

In one embodiment, the total protein content of the composition is from 65% to 90% of the composition, or from 65% to 85% of the composition, or from 65% to 80% of the composition.

In one preferred embodiment, the total protein content of the composition is from 70% to 90% of the composition, or from 75% to 90% of the composition, or from 75% to 85% of the composition.

The total protein content of the composition may, in one optional embodiment, be 80% or more; it may even be 85% or more, or 90% or more, 95% or more of the composition. It can even be that the total protein content of the composition makes up 98% or more, 99% or more, or even 99.5% or more of the composition.

In one preferred embodiment, the total non-protein content of the composition is from 10% to 35% of the composition, especially from 10% to 30% of the composition, e.g. from 10 to 25% of the composition or from 15 to 25% of the composition.

In the present invention it is intended that the whey protein isolate and non-denatured casein are the sole sources of protein in the composition. Of course, minor amounts or trace levels of other sources of protein could be included without altering the essence of the invention, but the invention is based on the significance of using two specific proteins, whey protein isolate and non-denatured casein, as the sources of protein in a specific ratio of from about 1:1.5 to about 1.5:1.

Thus it is preferred that the sources of protein in the composition consist essentially of whey protein isolate and non-denatured casein.

In one embodiment the whey protein isolate and non-denatured casein form at least 90% or more, such as 92% or more, 94% or more, 95% or more, 98% or more, or 99% or more, of the protein content of the composition. For example, the whey protein isolate and non-denatured casein may form from 90% to 100%, such as from 95 to 100 % or from 98 to 100% of the protein content of the composition.

In one preferred embodiment the whey protein isolate and non-denatured casein form from 99 to 100% of the protein content of the composition. In one preferred embodiment the whey protein isolate and non-denatured casein form at least 99.5% or more of the protein content of the composition, such as 99.8% or more or 99.9% or more.

In one embodiment, the total protein content of the composition may comprise from about 40 to 60% whey isolate and from about 40 to 60% non-denatured casein, with the total amount of protein of course adding to 100%.

In one such embodiment, the total protein content of the composition may comprise from about 42 to 60% whey isolate and from about 40 to 58% non-denatured casein.

In another such embodiment, the total protein content of the composition may comprise from about 40 to 58% whey isolate and from about 42 to 60% non-denatured casein.

In another such embodiment, the total protein content of the composition may comprise from about 45 to 60% whey isolate and from about 40 to 55% non-denatured casein.

In another such embodiment, the total protein content of the composition may comprise from about 40 to 55% whey isolate and from about 45 to 60% non-denatured casein.

The total protein content of the composition may comprise about 50% whey isolate and about 50% non-denatured casein. The protein content of the composition may comprise about 60% whey isolate and about 40% non-denatured casein. The protein content of the composition may comprise about 40% whey isolate and about 60% non-denatured casein. The protein content of the composition may comprise about 55% whey isolate and about 45% non-denatured casein. The protein content of the composition may comprise about 45% whey isolate and about 55% non-denatured casein.

In one suitable embodiment of the invention, the total protein content of the composition comprises from about 45 to 55% whey isolate and from about 45 to 55% non-denatured casein, e.g. from about 48 to 52% whey isolate and from about 48 to 52% non-denatured casein.

The composition may comprise at least 30g of whey isolate per 100 grams of composition, for example 31g or more, or 32g or more, or 33g or more. It may be that in some embodiments the composition comprises 35g or more of whey isolate per 100 grams of composition, for example 36g or more, or 37g or more, or 38g or more. In one embodiment there is from 30g to 50g of whey isolate per 100 grams of composition, such as from 31g to 48g or from 32g to 45g or from 33g to 43g.

The composition may comprise at least 30g of non-denatured casein per 100 grams of composition, for example 31g or more, or 32g or more, or 33g or more. It may be that in some embodiments the composition comprises 35g or more of non-denatured casein per 100 grams of composition, for example 36g or more, or 37g or more, or 38g or more. In one embodiment there is from 30g to 50g of non-denatured casein per 100 grams of composition, such as from 31g to 48g or from 32g to 45g or from 33g to 43g.

The composition may comprise at least 30g of whey isolate and 30g of non-denatured casein per 100 grams of composition, for example 32g or more of whey isolate and 32g or more of non-denatured casein.

There may, for example, be from 30g to 50g of whey isolate and from 30g to 50g of non-denatured casein, such as from 32g to 45g of whey isolate and from 32g to 45g of non-denatured casein, or from 33g to 43g of whey isolate and from 33g to 43g of non-denatured casein.

Whilst the composition of the invention is referenced as a food composition it will be appreciated that the person using the composition may choose to eat or drink the composition. For example, it may be eaten as a tablet or capsule, which may be swallowed or chewed, or it may be provided as a powder or granules that are to be swallowed. Alternatively, it may be drunk as a liquid; this may be provided to the person in ready-to-drink liquid form or may be prepared by mixing the composition, provided in the form of powder or granules or the like, with water or any other consumable liquid.

In a preferred embodiment the composition is intended to be consumed by being drunk, whether by virtue of the composition being provided in liquid form (ready-to-drink) or being provided in the form of a solid that is to be mixed with (dissolved or suspended in) a liquid before consumption.

The composition may, therefore, be provided as a solid, a liquid, or a gel. The composition may suitably be a solid, such as powder, granules, or solid pellets, or combinations thereof. Alternatively the composition may be a tablet or capsule. The composition may, in one embodiment, be a dry powder.

The solid composition, e.g. powder, granules, or solid pellets, may be provided in a form to be mixed with a liquid. In particular, the solid composition, e.g. the powder, granules, or solid pellets, may be provided in a form to be dissolved or suspended in a liquid. The liquid may be water, or may be a water-based product, e.g. milk or juice. Preferably the liquid is water. The water could be tap water or spring water or deionised water or tonic water or soda water; in general any form of water from any source can be used provided that the water is potable.

Thus the product of the invention may be a powdered composition that simply requires mixing with water to form a drink that includes the proteins dissolved or suspended in the water.

Where the composition is a liquid or gel, it suitably is based on an aqueous solvent or carrier. The aqueous solvent or carrier may, for example, be water. This could be tap water or spring water or deionised water or tonic water or soda water; in general any form can be used provided that the water is potable.

In one embodiment the food composition is provided as a liquid product in which the proteins are provided in suspended or dissolved form, e.g. a water-based liquid which may suitably be of the type known in the art as a shake.

Thus the product of the invention may be a ready-to-drink drink that includes the proteins dissolved or suspended in an aqueous liquid. The aqueous liquid may, for example, be water. This could be tap water or spring water or deionised water or tonic water or soda water; in general any form can be used provided that the water is potable.

The non-denatured casein may be in a form such that it will form micellar casein when in an aqueous environment. Where the food composition is provided as a liquid or gel, the non-denatured casein may comprise micellar casein.

The term 'micellar casein' is commonly used in the body-building field to denote a form of casein that either is in the form of micelles or that will form micelles when in an aqueous environment. However, to avoid confusion, in the present specification the term is only used when the casein actually is in the form of micelles. In scientific terms, micellar casein is a cluster of non-denatured casein molecules, which form into a micelle in an aqueous environment (e.g. micelles having a hydrophobic core and a hydrophilic surface).

Thus it will be appreciated that the non-denatured casein used in the present invention is preferably either in an aqueous environment and is in the form of micelles or is not in an aqueous environment but is in a form such that it will form micelles when it is in an aqueous environment, e.g. when mixed with water.

The non-denatured casein may be ultrafiltered non-denatured casein. The ultrafiltration may be ultrafiltration at low temperature, such as a non-denaturing temperature, room-temperature, or less. Ultrafiltration (UF) may be considered a variety of membrane filtration in which hydrostatic pressure forces a liquid against a semi-permeable membrane. The non-denatured casein may be provided by low-temperature ultrafiltration of milk. The milk may be organic or non organic.

The non-denatured casein may suitably be a purified form of non-denatured casein, e.g. a purified form of non-denatured casein that has been obtained by low-temperature ultrafiltration of milk, where less desirable fat fractions have been reduced and/or where the protein content has been increased. Preferably fat fractions have been reduced and the protein content has been increased. In general, it will be appreciated that by reducing the content of fat the percentage of protein in the remaining product, as a percentage, will have increased provided that no additional components/diluents are added. For example, fat fractions may have been reduced by 1% or more or 5% or more or 10% or more or 20% or more. The protein content may have been increased by 1% or more or 5% or more or 10% or more or 20% or more.

The non-denatured casein may have been purified by a process selected from Cross Flow Micro filtration (CFM®) ultra filtration (UF), micro filtration (MF), reverse osmosis (RO), dynamic membrane filtration (DMF), ion exchange chromatography, (IEC), electro-ultrafiltration (EU), radial flow chromatography (RFC) or nano filtration (NF), or combinations thereof.

The whey protein isolate may be obtained from a whey starting material as obtained after milk has been curdled and strained. The milk may be organic or non organic.

The whey protein isolate may suitably be a purified form of whey, where less desirable fat fractions have been reduced and/or protein content increased. Preferably fat fractions have been reduced and the protein content has been increased. In general, it will be appreciated that by reducing the content of fat the percentage of protein in the remaining product, as a percentage, will have increased provided that no additional components/diluents are added. For example, fat fractions may have been reduced by 1% or more or 5% or more or 10% or more or 20% or more. The protein content may have been increased by 1% or more or 5% or more or 10% or more or 20% or more.

The whey protein isolate may have been purified by a process selected from Cross Flow Micro filtration (CFM®) ultra filtration (UF), micro filtration (MF), reverse osmosis (RO), dynamic membrane filtration (DMF), ion exchange chromatography, (IEC), electro-ultrafiltration (EU), radial flow chromatography (RFC) or nano filtration (NF), or combinations thereof. For example, the CFM® processing method uses a low temperature micro filtration techniques that allows for the production of very high whey protein contents (>90%), the retention of important subfractions, low fat and lactose contents.

The whey isolate may comprise hydrolysed peptides of whey protein.

The whey protein isolate may be of non-human mammalian origin. The whey protein isolate may be from bovine origin, such as from cow's milk. The whey protein isolate may, however, be derived from other animal origin, such as from the milk of goat or sheep or camel.

The non-denatured casein may be of non-human mammalian origin. The non-denatured casein may be from bovine origin, such as from cow's milk. The non-denatured casein may, however, be derived from other animal origin, such as from the milk of goat or sheep or camel.

The composition of the invention consists of one or more further ingredients in addition to protein.

The one or more further ingredients are selected from the group comprising flavourings and sweeteners; flavour enhancers, including salt; thickeners, stabilisers and gelling agents; colourings; preservatives; foaming agents; vitamins and minerals; emulsifiers; fibre; oils and non-dairy creamers; and combinations thereof.

In one embodiment the one or more further ingredients may be selected from the group comprising flavourings and sweeteners; flavour enhancers, including salt; thickeners, stabilisers and gelling agents; colourings; vitamins and minerals; fibre; oils and non-dairy creamers; and combinations thereof.

Examples of flavourings and sweeteners include cocoa powder, vanilla, caramel, sucralose, saccharin, polydextrose and stevia. Examples of thickeners/stabilisers include starches, such as tapioca starch, and natural gums, such as xanthan or agar. Polydextrose may also be used as a thickener/stabiliser. Examples of oils and non-dairy creamer ingredients include fractionated palm oil, sunflower oil, sodium caseinate, soy lecithin and corn syrup solids. Examples of fibre ingredients include resistant dextrin (fibersol) and glucomannan. Examples of colourings include natural food dyes such as caramel coloring (E150), annatto (E160b), cochineal (E120), betanin (E162) or beetroot powder, and saffron (E160a). Examples of vitamins and minerals include vitamin B, vitamin C, vitamin D, calcium and magnesium.

In general, the skilled person will be aware of food additives that can be used in food compositions. The Codex Alimentarius, *Class Names and the International Numbering System for Food Additives,* sets out food additives from which the skilled person would be able to select, including examples of flavourings and sweeteners; flavour enhancers, including salt; thickeners, stabilisers and gelling agents; colourings; preservatives; foaming agents; vitamins and minerals; emulsifiers; fibre; and oils and non-dairy creamers.

The composition comprises two active protein sources, namely the whey isolate and the non-denatured casein. Therefore the composition will comprise amino acids.

In one embodiment, the composition comprises one or more amino acids selected from: Tryptophan; Threonine; Isoleucine; Leucine; Lysine; Methionine; Cystine; Phenylalanine; Tyrosine; Valine; and Histidine.

In one embodiment, two or more, or three or more, or four or more, or five or more of these amino acids are present. In one embodiment, all of these amino acids are present.

In one embodiment, the composition comprises one or more amino acids selected from: Alanine; Arginine; Aspartic acid; Cysteine; Glutamic acid; Glycine; Histidine; Isoleucine; Leucine; Lysine; Methionine; Phenylalanine; Proline; Serine; Threonine; Tryptophan; Tyrosine; and Valine.

In one embodiment, two or more, or three or more, or four or more, or five or more of these amino acids are present. In one embodiment, all of these amino acids are present.

The composition may optionally also include taurine. Whilst not an amino acid in the usual biochemical meaning of the term, it is a derivative of cysteine and has a role in many biological processes. Therefore in some instances it may be chosen to include taurine. However, in other embodiments taurine is not present.

The composition may be provided in solid form and may be provided with instructions to mix the composition with liquid, to form a drink. The instructions may refer to the use of an aqueous liquid, such as water. The instructions may, for example, instruct that a portion of the composition, which may be 20 to 50g, e.g. 25 to 45g, such as 30 to 40g, be mixed with an amount of water (e.g. 100 to 250ml water, such as 150 to 200ml water) to dissolve/suspend the composition and form a drink.

According to another aspect of the present invention, there is provided the use of the food composition according to the invention herein as a health supplement and/or body building supplement.

As discussed above, surprisingly the consumption of the composition by adults has been found to lead to significant gains in lean muscle. In particular, the consumption of the composition of the invention may provide much greater gains in lean muscle in the user's body than consumption of whey protein combined with BCAAs and glutamine.

According to another aspect of the present invention, there is provided a method of manufacturing a food composition, which is a protein supplement for adults, comprising:
mixing non-denatured casein with whey protein isolate in a ratio of between about 1:1.5 and about 1.5:1, and mixing one or more further ingredients, selected from the group consisting of flavourings and sweeteners; flavour enhancers, including salt; thickeners, stabilisers and gelling agents; colourings; preservatives; foaming agents; vitamins and minerals; emulsifiers; fibre; oils and non-dairy creamers; and combinations therefore; wherein the one or more further ingredients and the two proteins may be combined in any order; so as to obtain a food composition in accordance with the first aspect of the invention.

The further ingredients and the two proteins may be combined in any order. For example, the further ingredients could be mixed with the non-denatured casein before then mixing with the whey isolate, or vice-versa. The non-denatured casein and whey protein isolate could be mixed together before the further ingredients are added.

It will be appreciated that the further ingredients do not all need to be added at the same time and therefore some could be mixed with the non-denatured casein and/or some could be mixed with the whey protein isolate and/or some could be mixed with the combined non-denatured casein and whey protein isolate.

The method may further comprise the step of combining liquid with the proteins. The liquid and the proteins (and any further ingredients) may be combined in any order. For example, the liquid could be mixed with the non-denatured casein before then mixing with the whey isolate, or vice-versa. The non-denatured casein and whey protein isolate could be mixed together before the liquid is added.

The liquid must be suitable for use in a food product. The liquid is preferably an aqueous liquid, such as water. The water could be tap water or spring water or deionised water or tonic water or soda water; in general any form of water from any source can be used provided that the water is potable.

In general, in the present application, where reference is made to amounts these are with reference to weight, unless specifically stated otherwise.

The skilled person will understand that optional features of one embodiment or aspect of the invention may be applicable, where appropriate, to other embodiments or aspects of the invention.

### Exemplary Embodiments of the Invention

Embodiments of the invention will now be described in more detail, by way of example only.

Example powder compositions:
Total portion size: 35g

### Vanilla flavour

14.5 g whey protein isolate
14.5 g micellar casein
1.77 g polydextrose
1.75 g creamer (fractionated palm oil)
0.94 g flavour
0.67 g resistant dextrin (fibersol)
0.53 g tapioca starch
0.28 g xanthan gum
0.06 g sucralose

### Cookies flavour

14.3 g whey protein isolate
14.3 g micellar casein
1.77 g polydextrose
1.75 g creamer (fractionated palm oil)
1.34 g flavour
0.67 g resistant dextrin (fibersol)
0.53 g tapioca starch
0.28 g xanthan gum
0.06 g sucralose

### Strawberry flavour

14.3 g whey protein isolate
14.3 g micellar casein
1.77 g polydextrose
1.75 g creamer (fractionated palm oil)
1.1 g flavour
0.67 g resistant dextrin (fibersol)
0.53 g tapioca starch
0.28 g xanthan gum
0.24 g colour (beetroot powder)
0.06 g sucralose

### Chocolate flavour

13.6 g whey protein isolate
13.6 g micellar casein
2.1 g cocoa powder
1.05 g polydextrose
1.75 g creamer (fractionated palm oil)
1.4 g flavour
0.67 g resistant dextrin (fibersol)
0.49 g tapioca starch
0.28 g xanthan gum
0.06 g sucralose

For consumption, a 35g portion of the powder composition is added to 250ml drinking water and is mixed/shaken vigorously to form a beverage.

Quantities and portions may be varied, provided that the amount of whey protein isolate relative to non-denatured casein is in a ratio of from about 1:1.5 to about 1.5:1.

The beverage may be drunk at any time of day, including before exercise, after exercise, and before bedtime.

Use of the compositions of the invention, including the combination of the two proteins in a 1:1 ratio, gives rise to a more potent muscle-building effect in the four hours after a weight-training session as compared to whey protein alone.

## Claims

1. A food composition, which is a protein supplement for adults, consisting of
whey protein isolate and non-denatured casein; and
one or more further ingredients selected from the group consisting of: flavourings and sweeteners; flavour enhancers, including salt; thickeners, stabilisers and gelling agents; colourings; preservatives; foaming agents; vitamins and minerals; emulsifiers; fibre; oils and non-dairy creamers; and combinations thereof;
and optionally aqueous solvent or carrier;
wherein the amount of whey protein isolate relative to non-denatured casein is in a ratio of from about 1:1.5 to about 1.5:1,
and wherein the total amount of protein in the food composition is more than 60% by weight.

2. The food composition according to claim 1, wherein the ratio is:
(a) from about 1:1.3 to about 1.3:1; or
(b) from about 1:1.2 to about 1.2:1.

3. The food composition according to claim 1 or claim 2, wherein the ratio is from about 1:1.1 to about 1.1:1.

4. The food composition according to any preceding claim, wherein the composition is a solid, an aqueous liquid or an aqueous gel.

5. The food composition according to claim 4, wherein the composition is:
(a) a solid and the non-denatured casein forms micellar casein when in an aqueous environment; or
(b) the composition is a powder; or
(c) an aqueous liquid or aqueous gel and the non-denatured casein is in the form of micellar casein.

6. The food composition according to any preceding claim, wherein the whey protein isolate and/or non-denatured casein are:
(a) non-human mammalian in origin; or
(b) from bovine origin.

7. The food composition according to any preceding claim, wherein the total protein content of the composition is from 65% to 90% of the composition by weight.

8. The food composition according to any preceding claim, wherein the whey protein isolate and non-denatured casein form from 95 to 100% by weight of the total protein content of the composition.

9. The food composition according to any preceding claim, wherein the composition comprises at least 30g of whey isolate and 30g of non-denatured casein per 100 grams of composition.

10. Use of the food composition according to any preceding claim as a health supplement and/or body building supplement.

11. Use according to claim 10, wherein the use is to increase the amount of muscle mass in the body or to increase the strength of existing body muscles.

12. Use according to claim 11, wherein the use is to increase the amount of lean muscle mass in the body.

13. A method of manufacturing a food composition, which is a protein supplement for adults, comprising:
mixing non-denatured casein with whey protein isolate in a ratio of from about 1:1.5 to about 1.5:1,
and mixing one or more further ingredients, selected from the group consisting of flavourings and sweeteners; flavour enhancers, including salt; thickeners, stabilisers and gelling agents; colourings; preservatives; foaming agents; vitamins and minerals; emulsifiers; fibre; oils and non-dairy creamers; and combinations thereof;
wherein the one or more further ingredients and the two proteins may be combined in any order;
so as to obtain a food composition as defined in claim 1.

14. The method according to claim 13, wherein the ratio is:
(a) from about 1:1.3 to about 1.3:1; or
(b) from about 1:1.2 to about 1.2:1.

15. The method according to claim 13 or claim 14, further comprising the step of mixing liquid with the proteins.

## Patentansprüche

1. Lebensmittelzusammensetzung, die ein Proteinergänzungsmittel für Erwachsene ist, bestehend aus
Molkeproteinisolat und nichtdenaturiertem Kasein; und
einem oder mehreren weiteren Inhaltsstoffen ausgewählt aus der Gruppe bestehend aus: Aromastoffen und Süßstoffen; Aromaverstärkern, einschließlich Salz; Verdickungsmitteln, Stabilisatoren und Gelbildnern; Farbstoffen; Konservierungsmitteln; Schaumbildnern; Vitaminen und Mineralstoffen; Emulgatoren; Fasern, Ölen und milchfreien Weißern; und Kombinationen davon;
und gegebenenfalls wässrigem Lösungsmittel oder Träger;
wobei die Menge an Molkeproteinisolat gegenüber nichtdenaturiertem Kasein ein Verhältnis von etwa 1:1,5 bis etwa 1,5:1 aufweist,
und wobei die Gesamtmenge an Protein in der Lebensmittelzusammensetzung mehr als 60 Gew.-% beträgt.

2. Lebensmittelzusammensetzung gemäß Anspruch 1, wobei das Verhältnis beträgt:
(a) von etwa 1:1,3 bis etwa 1,3:1; oder
(b) von etwa 1:1,2 bis etwa 1,2:1.

3. Lebensmittelzusammensetzung gemäß Anspruch 1 oder Anspruch 2, wobei das Verhältnis von etwa 1:1,1 bis etwa 1,1:1 beträgt.

4. Lebensmittelzusammensetzung gemäß einem der vorstehenden Ansprüche, wobei die Zusammensetzung ein Feststoff, eine wässrige Flüssigkeit oder ein wässriges Gel ist.

5. Lebensmittelzusammensetzung gemäß Anspruch 4, wobei die Zusammensetzung ist:
(a) ein Feststoff, wobei das nichtdenaturierte Kasein, wenn in einer wässrigen Umgebung, micellares Kasein bilden; oder
(b) die Zusammensetzung ist ein Pulver; oder
(c) eine wässrige Flüssigkeit oder ein wässriges Gel, wobei das nichtdenaturierte Kasein in der Form von micellarem Kasein vorliegen.

6. Lebensmittelzusammensetzung gemäß einem der vorstehenden Ansprüche, wobei das Molkeproteinisolat und/oder das denaturierte Kasein sind:
(a) von nicht-menschlichem Säugerursprung; oder
(b) von Rinderursprung.

7. Lebensmittelzusammensetzung gemäß einem der vorstehenden Ansprüche, wobei der Gesamtproteingehalt der Zusammensetzung von 65 Gew.-% bis 90 Gew.-% der Zusammensetzung beträgt.

8. Lebensmittelzusammensetzung gemäß einem der vorstehenden Ansprüche, wobei das Molkeproteinisolat und das nichtdenaturierte Kasein von 95 bis 100 Gew.-% des Gesamtproteingehalts der Zusammensetzung bilden.

9. Lebensmittelzusammensetzung gemäß einem der vorstehenden Ansprüche, wobei die Zusammensetzung wenigstens 30 g Molkeisolat und 30 g nichtdenaturiertes Kasein pro 100 Gramm Zusammensetzung umfasst.

10. Verwendung der Lebensmittelzusammensetzung gemäß einem der vorstehenden Ansprüche als Gesundheitsergänzungsmittel und/oder als Körperaufbauergänzungsmittel.

11. Verwendung gemäß Anspruch 10, wobei die Verwendung zum Erhöhen der Menge an Muskelmasse in dem Körper oder zum Erhöhen der Stärke von bestehenden Körpermuskeln ist.

12. Verwendung gemäß Anspruch 11, wobei die Verwendung zum Erhöhen der Menge an Magermuskelmasse in dem Körper ist.

13. Verfahren zum Herstellen einer Lebensmittelzusammensetzung, die ein Proteinergänzungsmittel für Erwachsene ist, umfassend:
Mischen von nichtdenaturiertem Kasein mit Molkeproteinisolat in einem Verhältnis von etwa 1:1,5 bis etwa 1,5:1,
und Mischen eines oder mehrerer weiterer Inhaltsstoffe ausgewählt aus der Gruppe bestehend aus Aromastoffen und Süßstoffen; Aromaverstärkern, einschließlich Salz; Verdickungsmitteln, Stabilisatoren und Gelbildnern; Farbstoffen; Konservierungsmitteln; Schaumbildnern; Vitaminen und Mineralstoffen; Emulgatoren; Fasern, Ölen und milchfreien Weißern; und Kombinationen davon;
wobei der eine oder die mehreren weiteren Inhaltsstoffe und die beiden Proteine in beliebiger Reihenfolge kombiniert werden können;
um eine Lebensmittelzusammensetzung gemäß Anspruch 1 zu erhalten.

14. Verfahren gemäß Anspruch 13, wobei das Verhältnis beträgt:
(a) von etwa 1:1,3 bis etwa 1,3:1; oder
(b) von etwa 1:1,2 bis etwa 1,2:1.

15. Verfahren gemäß Anspruch 13 oder Anspruch 14, ferner umfassend den Schritt des Mischens von Flüssigkeit mit den Proteinen.

## Revendications

1. Composition alimentaire, qui est un complément protéiné pour adultes, constitué
d'un isolât de protéines de lactosérum et de caséine non dénaturée ; et
d'un ou plusieurs ingrédients supplémentaires choisis dans le groupe constitué par les aromatisants et les édulcorants ; les exhausteurs d'arôme, y compris le sel ; les épaississants, les stabilisants et les agents gélifiants ; les colorants ; les conservateurs ; les agents moussants, les vitamines et les minéraux ; les émulsifiants ; les fibres ; les huiles et les crèmes non laitières ; et des combinaisons de ceux-ci ;
et éventuellement un véhicule ou un solvant aqueux ;
où la quantité d'isolat de protéines de lactosérum par rapport à la caséine non dénaturée se trouve selon un rapport allant d'environ 1:1,5 à environ 1,5:1 ;
et où la quantité totale de protéine dans la composition alimentaire est supérieure à 60% en poids.

2. Composition alimentaire selon la revendication 1, où le rapport va :
(a) d'environ 1:1,3 à environ 1,3:1 ; ou
(b) d'environ 1:1,2 à environ 1,2:1.

3. Composition alimentaire selon la revendication 1 ou selon la revendication 2, où le rapport va d'environ 1:1,1 à environ 1,1:1.

4. Composition alimentaire selon l'une quelconque des revendications précédentes, où la composition est un solide, un liquide aqueux ou un gel aqueux.

5. Composition alimentaire selon la revendication 4, où la composition est :
(a) un solide et la caséine non dénaturée forme de la caséine micellaire lorsqu'elle se trouve dans un environnement aqueux ; ou
(b) la composition est une poudre ; ou
(c) un liquide aqueux ou un gel aqueux et la caséine non dénaturée se trouve sous la forme de caséine micellaire.

6. Composition alimentaire selon l'une quelconque des revendications précédentes, où l'isolat de protéines de lactosérum et/ou la caséine non dénaturée sont :
(a) d'origine mammalienne non humaine ; ou
(b) d'origine bovine.

7. Composition alimentaire selon l'une quelconque des revendications précédentes, où la teneur totale en protéine de la composition va de 65% à 90% de la composition en poids.

8. Composition alimentaire selon l'une quelconque des revendications précédentes, où l'isolat de protéines de lactosérum et la caséine non dénaturée forment de 95 à 100% en poids de la teneur totale en protéine de la composition.

9. Composition alimentaire selon l'une quelconque des revendications précédentes, où la composition comprend au moins 30 g d'isolat de protéines de lactosérum et 30 g de caséine non dénaturée pour 100 grammes de composition.

10. Utilisation de la composition alimentaire selon l'une quelconque des revendications précédentes, comme complément diététique et/ou complément pour culturisme.

11. Utilisation selon la revendication 10, où l'utilisation consiste à augmenter la quantité de masse musculaire dans l'organisme ou augmenter la force des muscles existants de l'organisme.

12. Utilisation selon la revendication 11, où l'utilisation consiste à augmenter la quantité de masse musculaire maigre dans l'organisme.

13. Méthode de fabrication d'une composition alimentaire, qui est un complément protéiné pour adultes, comprenant :
le mélange de caséine non dénaturée avec un isolât de protéines de lactosérum selon un rapport allant d'environ 1:1,5 à environ 1,5:1 ;
et le mélange d'un ou plusieurs ingrédients supplémentaires choisis dans le groupe constitué par les aromatisants et les édulcorants ; les exhausteurs d'arôme, y compris le sel ; les épaississants, les stabilisants et les agents gélifiants ; les colorants ; les conservateurs ; les agents moussants, les vitamines et les minéraux ; les émulsifiants ; les fibres ; les huiles et les crèmes non laitières ; et des combinaisons de ceux-ci ;
où les un ou plusieurs ingrédients supplémentaires et les deux protéines peuvent être combinés selon un ordre quelconque ;
de façon à obtenir une composition alimentaire telle que définie selon la revendication 1.

14. Méthode selon la revendication 13, où le rapport va :
(a) d'environ 1:1,3 à environ 1,3:1 ; ou
(b) d'environ 1:1,2 à environ 1,2:1.

15. Méthode selon la revendication 13 ou la revendication 14, comprenant en outre l'étape de mélange de liquide avec les protéines.
